Europäisches Patentamt

European Patent Office

Office européen des brevets

(11) Veröffentlichungsnummer: **0 087 030**
A2

(12) **EUROPÄISCHE PATENTANMELDUNG**

(21) Anmeldenummer: 83101073.1

(22) Anmeldetag: 04.02.83

(51) Int. Cl.³: **F 16 H 3/72**

(30) Priorität: 06.02.82 DE 3204150

(43) Veröffentlichungstag der Anmeldung:
31.08.83 Patentblatt 83/35

(84) Benannte Vertragsstaaten:
AT BE CH FR GB IT LI LU NL SE

(71) Anmelder: Kleff, Heinrich
Provinzialstrasse 327
D-4600 Dortmund(DE)

(72) Erfinder: Kleff, Heinrich
Provinzialstrasse 327
D-4600 Dortmund(DE)

(74) Vertreter: Patentanwälte Wenzel & Kalkoff
Ruhrstrasse 26 Postfach 2448
D-5810 Witten(DE)

(54) Stufenlos regelbares Getriebe mit Drehzahl-Drehmomentregelung.

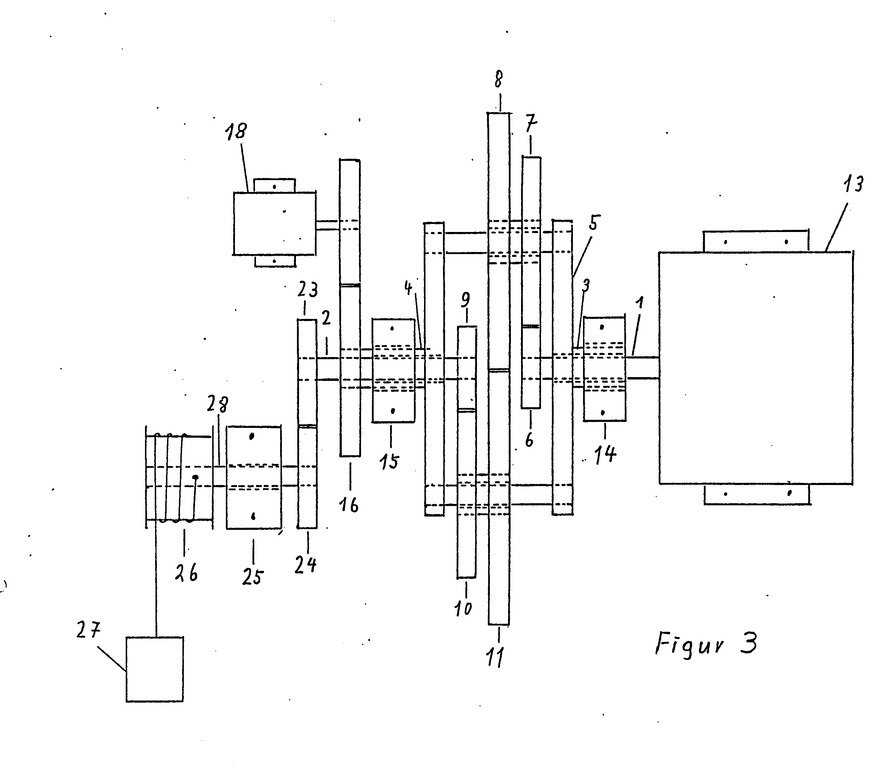

(57) Der Zweck des Getriebes ist eine stufenlose Drehmomentanpassung für Maschinen und Fahrzeuge. Der Aufbau und die Funktion des Getriebes ist anhand der Figur 3 zu ersehen, in der das Getriebe einschließlich Antriebsmotor, Regler und Abtrieb dargestellt ist. Die bekannten derartigen Getriebe haben einen Getriebeeingang und zwei leistungsmäßig gleichberechtigte Getriebeausgänge, während bei diesem Regelgetriebe nur einer der zwei Getriebeausgänge die volle Leistung übetragen kann. An dem zweiten Getriebeausgang kann nur ein geringer Teil der Eingangsleistung entnommen werden, wobei jedoch ein voller Ausgleich der Eingangsdrehzahl möglich ist. Entsprechend dieser Funktion ist mit Hilfe des Reglers eine Drehzahl-Drehmomentregelung an dem ersten Getriebeausgang des Regelgetriebes möglich. Bedingt durch den großen Regelbereich von Null bis zum Drehzahlverhältnis 1:1 hat das Regelgetriebe zusätzlich die Funktion einer Anfahrkupplung.

Figur 3

EP 0 087 030 A2

Croydon Printing Company Ltd.

Anmelder:            Heinrich Kleff
                     Provinzialstraße 327
                     4600 Dortmund

Bezeichnung:         Stufenlos regelbares Getriebe mit
                     Drehzahl-Drehmomentregelung

Die Erfindung betrifft ein stufenlos regelbares Getriebe, gemäß dem Oberbegriff des Patentanspruchs.

Der Zweck des Getriebes ist darin begründet, eine stufenlose Drehmomentanpassung für die Massenbeschleunigung bei Hebezeugen, Maschinen und Fahrzeugen zu erzeugen.

Bisher wird dieses Problem mit Hilfe von Stufengetrieben, Keilriemengetrieben oder auch mit Hydraulikgetrieben nur unzulänglich bewältigt. Auch Versuche, mittels zusammengeschalteter Differential- und Umlaufgetriebe Drehzahl und Drehmoment zu regeln, sind bisher ergebnislos geblieben. Mittels der vorgenannten Getriebe kann nur eine Drehzahlregelung erfolgen, die aber mit einer entsprechend großen Verlustleistung verbunden ist.

Der Erfindung liegt die Aufgabe zugrunde, ein Getriebe herzustellen, welches eine verlustarme Drehzahl-Drehmomentregelung mit Hilfe eines Reglers ermöglicht.

Diese Aufgabe wird durch die Erfindung eines Getriebes mit den Merkmalen des Patentanspruchs gelöst.

Das Getriebe besteht aus zwei zusammengeschalteten Systemen, die sich gegenseitig so abstützen, daß ein Nebenschlußverhalten möglich wird.

Der mit der Erfindung erzielte Vorteil besteht darin, daß das Getriebe eine gute Anpassung zwischen einem Antriebsmotor und den verschiedensten Maschinen herstellen kann. Mit Hilfe eines Reglers kann eine verlustarme Drehzahl-Drehmomentregelung von Null bis zum Übertragungsverhältnis 1:1 erzielt werden, wobei der Regler zugleich die Funktion einer Anfahrkupplung übernehmen kann.

Ein im Oberbegriff des Patentanspruchs dargestelltes Getriebe ist aus der Druckzeitschrift Machine Design, September 1971 (S. 163) bekannt. Die Gemeinsamkeiten mit dem vorher beschriebenen stufenlos regelbaren Getriebe finden sich darin, daß es ebenfalls eine koaxiale Ein- und Ausgangswelle mit den darauf befestigten Zahnrädern, einen drehbar angeordneten Träger und zwei Stufenplaneten hat, die aber nebeneinander angeordnet sind. Außerdem besitzt das dort dargestellte Getriebe zwei zusätzliche koaxial angeordnete Zahnräder, die mit den vorgenannten Stufenplaneten kämmen.

Durch diese Zusammenstellung bedingt hat das Getriebe jedoch die Funktion eines Umlaufgetriebes, das eine verlustreiche Drehzahlregelung, aber keine Drehmomenterhöhung ermöglicht.

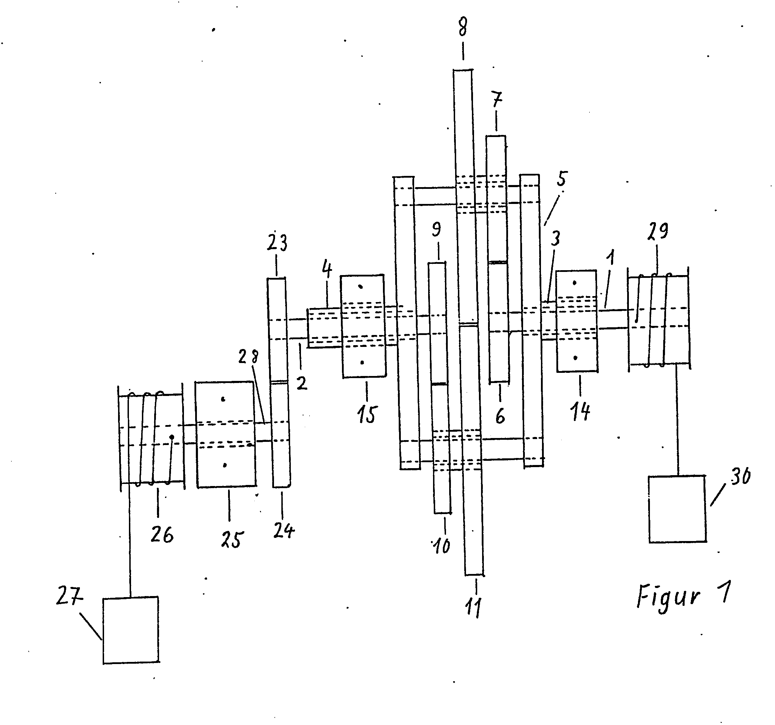

Die Beschreibung des stufenlos regelbaren Getriebes erfolgt anhand der Figuren 1 - 3.

Damit die Funktion des Regelgetriebes verständlich wird, muß die Funktion der bisher bekannten Getriebe zum Vergleich erwähnt werden.

Alle bekannten Getriebe beruhen auf dem Gesetz, Eingangsmoment plus Gegenmoment minus Stützmoment ist gleich Null, damit ein Momentengleichgewicht vorhanden ist (System Balkenwaage).

Für das Regelgetriebe ist diese sonst allgemein gültige Formel nicht anwendbar. Bei dem System des Regelgetriebes wird das Gegenmoment durch eine Gegendrehbewegung je nach der Konstruktion ganz oder teilweise erzeugt.

Zunächst wird anhand der Zeichnungen in den Figuren 1, 2 und 3 der Aufbau des Getriebes erläutert:

Die Welle 1 mit dem darauf befestigten Zahnrad 6 ist drehbar in der Hohlwelle 3 gelagert. Die Hohlwellen 3 und 4 sind mit dem Träger 5 mechanisch fest verbunden und in den Lagerblöcken 14 und 15 drehbar gelagert. In der Hohlwelle 4 ist die Welle 2 drehbar gelagert, an der das Zahnrad 9 befestigt ist. Mit dem Zahnrad 6 im Eingriff ist das Zahnrad 7, welches mittels der Hohlwelle 12 mit dem Zahnrad 8 starr verbunden ist und einen Stufenplaneten bildet. Das Zahnrad 9 steht mit dem Zahnrad 10 im Eingriff, das mittels der Hohlwelle 13 mit dem Zahnrad 11 starr verbunden ist und einen weiteren Stufenplaneten bildet. Die Hohlwellen 12 und 13 sind jede auf einer der beiden Wellen des Trägers 5 gelagert. Von besonderer Bedeutung ist, daß sich der Eingriff der Zahnräder 8 und 11 im Mittelpunkt des Getriebes befindet. Das Getriebe besteht praktisch aus zwei gegeneinander geschalteten Systemen, die über zwei Wege miteinander verbunden sind, nämlich einmal über den Träger 5 und zum anderen am Eingriff der Zahnräder 8 und 11.

Die Seiltrommel 29 ist auf der Welle 1 befestigt, an welcher mittels eines Seils das Gewicht 30 hängt. Auf der Welle 2 befestigt ist das Zahnrad 23, das mit dem Zahnrad 24 im Eingriff ist, das ebenso wie die Seiltrommel 26 auf der Welle 28 befestigt ist, an der mittels eines aufgespulten Seils das Gewicht 27 hängt. Der Lagerbock 25 ist als zusätzliche Abstützung erforderlich, damit der Träger 5 frei drehen kann. Bei der Figur 1 haben die im Eingriff befindlichen Zahnräder alle das Größenverhältnis 1:1 . Somit wird die Drehzahl von der Welle 1 zur Welle 2 auch im Verhältnis 1:1 , allerdings mit umgekehrter Drehrichtung übertragen. Über die Zahnräder 23 und 24, die ebenfalls das Größenverhältnis 1:1 haben, erfolgt eine Drehrichtungsänderung, so daß die Seiltrommeln 29 und 26 die gleiche Drehrichtung haben.

Blockiert man die Welle 2, so führt bei einer Umdrehung der Welle 1 der Träger 5                  0,5 Umdrehungen aus in der gleichen Drehrichtung wie die Welle (1). Konstruktionsbedingt sind bei einer Umdrehung/Zeiteinheit der Welle 1 und bei einer Ausgleichsdrehzahl von 0,5 Umdrehungen/Zeiteinheit des Träger 5 die Drehzahlen der Zahnräder wie folgt: Zahnrad 9 (da es blockiert ist) 0 Umdrehung/Zeiteinheit, Zahnrad 6   1 Umdrehung/Zeiteinheit; das Zahnrad 10 rollt auf dem Zahnrad 9 ab und macht zusammen mit dem Zahnrad 11  1 Umdrehung/Zeiteinheit. Das Zahnrad 6 rollt auf dem Zahnrad 7 ab und das Zahnrad 11 auf dem Zahnrad 8. Die Zahnräder 7 und 8 haben keine Drehbewegung, sie werden, ohne ihre Lage zu verändern, in einem Halbkreis herumgeführt.

Für die nächste Betrachtung soll mittels der Seiltrommeln und der Gewichte an der Welle 1 und an der Welle 2 jeweils ein Moment von 1 cmkg anstehen. Entsprechend der Momentenbilanz  ist am Eingriff der Zahnräder 8 und 1 sowie an dem Träger 5 ein Momentengleichgewicht vorhanden.

Dieser Gleichgewichtszustand ist ein labiler Zustand und nur bei völliger Ruhelage des Getriebes vorhanden. Der Gleichgewichtszustand ist bei einer Drehbewegung der drehenden Zahnräder nicht mehr vorhanden. Versetzt man die Welle 1 und somit das Zahnrad 6 in eine Drehbewegung, so rollt das Zahnrad 10 auf dem Zahnrad 9 ab, das Zahnrad 11 stützt sich auf dem Zahnrad 8 ab, (das, wie vorher beschrieben, keine Drehbwegung ausführt), so daß an dem Träger 5, der nur die halbe Drehzahl hat, das Moment 2 cmkg entsteht. Dadurch, daß die Zahnräder 7 und 8 sich nicht drehen, stellen sie für das drehbar angeordnete Getriebe einen konstruktionsbedingten, künstlichen Festpunkt dar.

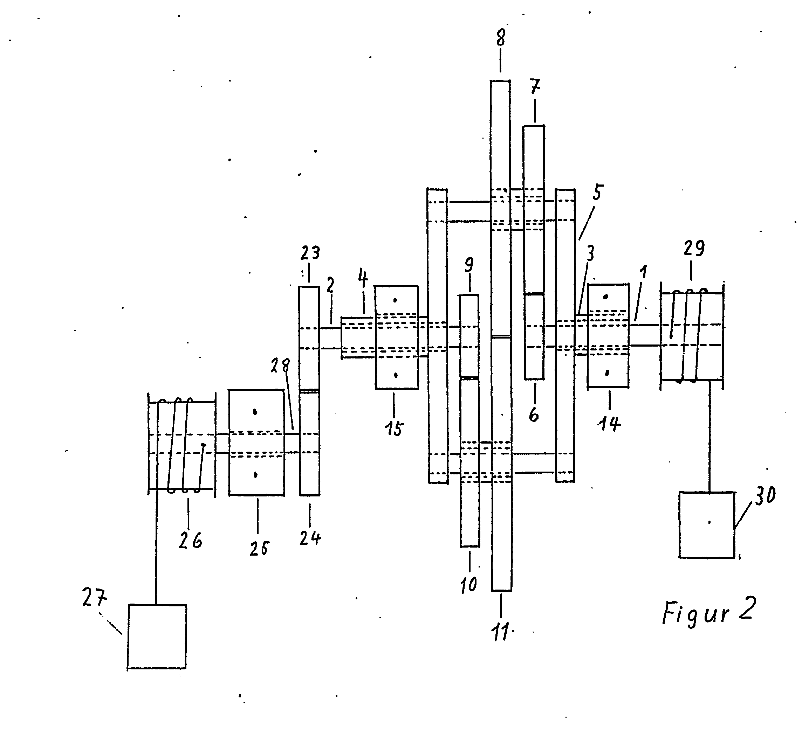

Der nächsten Betrachtung liegt die Figur 2 zugrunde. Es ist hier die gleiche Konstruktion vorhanden, nur die Größenverhältnisse der Zahnräder 6 und 7 sowie 9 und 11 sind hier 1:2. Bei blockierter Welle 2 und einer Eingangsdrehzahl von 1 Umdrehung/Zeiteinheit an der Welle 1 sind die Drehzahlen der Zahnräder wie folgt: Zahnrad 9   0 Umdrehungen/Zeiteinheit, Zahnrad 6   1 Umdrehung/Zeiteinheit, Träger 5   0,5 Ausgleichsumdrehungen/Zeiteinheit, die Zahnräder 7 und 8 sowie die Zahnräder 10 und 11 machen je eine halbe Drehbewegung/Zeiteinheit und je zu einem Viertel werden sie im Kreis herumgeführt.

Für die nächste Betrachtung sollen an der Welle 1 und an der Welle 2 wieder die Momente 1 cmkg anstehen. Entsprechend der Momentenbilanz ist am Eingriff der Zahnräder 8 und 11 sowie an dem Träger 5 ein Momentengleichgewicht vorhanden. Versetzt man die Zahnräder in Bewegung, so bleibt das Momentengleichgewicht erhalten, weil die Zahnräder 7 und 8 sowie die Zahnräder 10 und 11 die gleichen Bewegungen ausführen. Hierbei ist noch nachzutragen, daß das Übertragungsverhältnis von der Welle 1 zur Welle 2 1:1 und die Ausgleichsdrehzahl an dem Träger 5 0,5 Umdrehungen/Zeiteinheit unverändert wie bei der Figur 1 geblieben ist.

Die Figur 3 soll die Grundlage für die nächsten Überlegungen sein. Der Aufbau und die Größenverhältnisse der Zahnräder sind mit der Figur 2 identisch. Zusätzlich ist ein Regler 18 vorhanden, der über das Zahnrad 16 und die Hohlwelle 4 mit dem Träger 5 verbunden ist. Statt der Seiltrommel 29 ist jetzt der Antriebsmotor 13 vorhanden.

In diesem Fall soll das Moment des Motors und das Moment an der Seiltrommel 26 gleich groß sein. Setzt man die Welle 1 in Bewegung, indem der Motor ein zusätzliches Drehmoment aufbringt, so kommt das Getriebe aus dem Gleichgewicht, die Eingangsdrehzahl wird über den Träger 5 ausgeglichen. Das Getriebe kann das Gleichgewicht allein nicht einstellen, es benötigt für das zusätzliche Drehmoment eine zusätzliche Abstützung. Das kann man erreichen, indem der Träger 5 über den Regler 18 abgebremst wird. Da aber die Bremsenergie dem Getriebe entnommen wird, muß die Ausgangsdrehzahl des Getriebes geringfügig kleiner sein. Das Übertragungsverhältnis 1:1 kann nur durch eine Blockierung des Trägers 5 erreicht werden.

Die Leistungsverluste bei der Regelung des Getriebes dürften, ähnlich wie bei einem elektrischen Asynchronmotor ca. 3 % sein. Nach den vorhergehenden Betrachtungen hat das Getriebe einen Festpunkt, so daß sich bei einer kleineren Ausgangsdrehzahl ein größeres Ausgangsdrehmoment einstellen muß.

P a t e n t a n s p r u c h

Stufenlos regelbares Getriebe mit koaxialer Ein- und Ausgangswelle, bei dem ein auf der Eingangswelle festes Zahnrad (6) mit einem ersten Stufenrad (7) eines ersten auf einem Träger (5) drehbaren Stufenplaneten kämmt, dessen zweites Stufenrad (8) in Kämmverbindung mit einem zweiten Stufenrad (11) eines zweiten auf dem Träger (5) drehbaren Stufenplaneten steht, dessen erstes Stufenrad (10) mit einem auf der Ausgangswelle befestigten Zahnrad (9) kämmt, wobei der drehbar angeordnete Träger (5) über eine Regeleinrichtung (18) regelbar ist, dadurch  g e k e n n z e i c h n e t, daß nur ein erster und zweiter Stufenplanet vorgesehen sind, die einander gegenüberliegen, und daß die beiden zweiten Stufenräder direkt miteinander kämmen.

Figur 1

Figur 2

0087030

Figur 3